# EUROPÄISCHE PATENTANMELDUNG

(11) **EP 1 260 340 A1**
(43) Veröffentlichungstag der Anmeldung: **27.11.2002**
(21) Anmeldenummer: 02003413.8
(22) Anmeldetag: 14.02.2002
(51) Int. Cl.: B29C 45/14, B60H 3/06

(54) **Filterkassette und Spritzgiesswerkzeug zur Herstellung des Filterkassettenrahmens**

(30) Priorität: 22.05.2001 DE 10124846
(71) Anmelder: Carl Freudenberg KG, 69469 Weinheim (DE)
(72) Erfinder: Eberle, Adam, 64658 Linnenbach (DE)

(57) **Zusammenfassung**

Spritzgießwerkzeug zur Herstellung eines Kunststoffrahmens an Filterkassetten durch randseitiges Umspritzen der Längsseiten eines zickzackförmig gefalteten Filtermaterials mit Kunststoff, wobei die Werkzeughälften des Spritzgießwerkzeugs zahnförmig ineinandergreifend ausgebildet sind und einen Aufnahmeraum für das Filtermaterial und einen Formraum für den Kunststoffrahmen bilden, welche durch einen von den Werkzeugzähnen gebildeten Klemmbereich voneinander getrennt sind, wobei im Klemmbereich (31) der Längsseiten (4) des Spritzgießwerkzeugs (30) das Spaltmaß (7, 17) zwischen den geschlossenen Formhälften (1, 2) des Spritzgießwerkzeugs (30) im Bogenbereich (32) der oberen und/oder unteren Faltenkanten (9, 10) des Filtermaterials (3) kleiner oder größer als das Spaltmaß (8) der Faltenflanken (11) ist.

## Beschreibung

### Technisches Gebiet

Bei Filteranlagen werden häufig Filterkassetten verwendet, die in einer vorgegebenen Öffnung auswechselbar eingesetzt werden können. Beispielsweise werden Filterkassetten bei Fahrzeugen in den Luftströmungskanal eingesetzt, um die in den Innenraum der Fahrzeuge eingeströmte Luft zu reinigen. In der Regel bestehen die Filterkassetten aus einem zickzackförmig gefalteten Filtermaterial, das von einem Kunststoffrahmen eingefasst ist. Für die Herstellung des Kunststoffrahmens wird das Filtermaterial in ein Spritzgießwerkzeug eingelegt und der Kunststoff in den entsprechenden Formraum eingespritzt. Die Spritzgießwerkzeuge bestehen aus zwei gegenseitig verschiebbaren Werkzeughälften, zwischen die die Ränder des Filtermaterials eingeklemmt werden. Dies ist erforderlich, um beim Einspritzen des Kunststoffs in den Formraum ein Eindringen vom Kunststoff in den Aufnahmeraum des Werkzeugs zu verhindern. Dieses gestaltet sich jedoch dann besonders schwierig, wenn das Filtermaterial eine adsorbenshaltige Schicht, zum Beispiel aus Aktivkohlegranulat enthält. Die an den Rändern des Filters vorhandene Flächenpressung durch das Spritzgießwerkzeug ist nicht gleichmäßig und es besteht die Gefahr, dass Kunststoff vom Formraum in den Aufnahmeraum des Filters eindringt. Insbesondere an den Stellen, an denen am Filtermaterial Beschädigungen während des vorangegangenen Faltvorgangs aufgetreten sind.

Während bei den Querseiten des Filters durch eine entsprechende Auswahl des Spaltmaßes zwischen den Formhälften des Spritzgießwerkzeugs in Bezug auf die Filterdicke eine etwa gleichmäßige spezifische Flächenpressung erreicht werden kann, ist dieses an den Längsseiten des Filtermaterials nicht gegeben. Durch das Falten des zunächst ebenen Filtermaterials entstehen im Bereich der Faltenkanten Zugspannungen, die an diesen Stellen zur plastischen Verformung und gegebenenfalls zum Aufreißen des Filtermaterials führen können. Dies tritt insbesondere bei einem Filtermaterial mit einer stärkeren Adsorbensschicht auf.

Die bisher bekannten Spritzgießwerkzeuge zum randseitigen Umspritzen eines zickzackförmig gefalteten Filtermaterials bestehen aus zwei Formhälften, wobei die Formhälften entsprechend der Form des Filtermaterials zahnförmig ineinandergreifend ausgebildet sind und einen Aufnahmeraum für das Filtermaterial sowie einem Formraum zur Aufnahme der Längsseiten des Filtermaterials und zum Formen des um den Rand der Längsseiten zu spritzenden Kunststoffs begrenzen. Die obere und untere Formhälfte besitzen Begrenzungswände, so dass die Formhälften in einen definierten Abstand zueinander gebracht werden können. In dem sich bildenden Spalt im Klemmbereich zwischen den Formhälften des Spritzgießwerkzeugs wird das Filtermaterial erfaßt. Dabei hat der Spalt eine Höhe, die kleiner ist als die Dicke des Filtermaterials, so dass das Filtermaterial geringfügig zusammengepresst wird und zwischen den Formhälften eingeklemmt ist. Bei einigen Filtermaterialien, insbesondere adsorbenshaltigem Filtermaterial, besteht jedoch die Gefahr, dass die Materialdicke im Bereich der Faltenkanten durch die plastische Verformung oder ein Aufreißen der Materialschicht während des Faltvorgangs deutlich geringer ist als in anderen Bereichen. Hier kann flüssiger Kunststoff während des Gießvorgangs in den Aufnahmeraum und damit auf die Filterfläche des Filtermaterials gelangen.

### Stand der Technik

Aus der DE 197 45 919 C1 ist ein Spritzgießwerkzeug bekannt geworden, das für die Herstellung des Kunststoffrahmens für Filterkassetten geeignet ist. Dabei wird als Filtermaterial ein Material verwendet, das Partikel zum Ad- oder Absorbieren fester und/oder gasförmiger Bestandteile eines Fluids aufweist. Um das Eindringen von Kunststoffmaterial während des Gießvorgangs vom Formraum in den Aufnahmeraum des Filters zu verhindern, ist an den Querseiten des Filters in dem Bereich zwischen Formraum und Aufnahmeraum ein Übergangsraum vorgesehen, in dem die Endfalten des Filters mit Verengungs- und Aufweitungsbereichen ausgestattet sind, so dass eine Art Labyrinthdichtung entsteht und die beiden Formhälften des Spritzgießwerkzeugs lediglich mit einem geringen Anpressdruck an dem Filtermaterial anliegen können. Mit diesem Spritzgießwerkzeug kann eine zufriedenstellende Abdichtung erreicht werden, allerdings unter Inkaufnahme höherer Herstellungskosten für das Werkzeug. Außerdem wird an den Rändern des Filters Filterfläche vergeben, die für die Bildung der Labyrinthdichtung erforderlich ist. Hierdurch wird bei einer vorgegebenen Größe der Filterkassetten auch Filterraum verschenkt.

### Darstellung der Erfindung

Der Erfindung liegt somit die Aufgabe zugrunde, ein Spritzgießwerkzeug zu schaffen, mit dem Überspritzungen vermieden werden und eine Filterkassette herstellbar ist, bei der eine sichere Trennung von Aufnahmeraum für das Filtermaterial und Formraum für den Kunststoffrahmen gegeben ist.

Die Lösung der gestellten Aufgabe wird bei einem Spritzgießwerkzeug zur Herstellung eines Kunststoffrahmens an einer Filterkassette durch randseitiges Umspritzen der Längsseiten eines zickzackförmig gestalteten Filtermaterials mit Kunststoff, wobei die Werkzeughälften des Spritzgießwerkzeugs zahnförmig ineinandergreifend ausgebildet sind und einen Aufnahmeraum für das Filtermaterial und einen Formraum für den Kunststoffrahmen bilden, welche durch einen von den Werkzeugzähnen gebildeten Klemmbereich voneinander getrennt sind, erfindungsgemäß dadurch erreicht, dass im Klemmbereich der Längsseiten des Spritzgießwerkzeugs das Spaltmaß zwischen den geschlossenen Formhälften des Spritzgießwerkzeugs im Bogenbereich der oberen und/oder unteren Faltenkanten des Filtermaterials kleiner oder größer als das Spaltmaß der Faltenflanken ist. Durch diese Maßnahme wird in allen Bereichen der Längsseiten des Filtermaterials eine Flächenpressung von etwa übereinstimmender Größe erreicht und zwar unabhängig davon, in welcher Dicke das Filtermaterial vorliegt. Besonders geeignet ist ein solches Spritzgießwerkzeug bei der Herstellung von Filterkassetten mit Filtermaterialien, die eine adsorbenshaltige Schicht haben, zum Beispiel aus Aktivkohlegranulat. Eventuell aufgetretene Beschädigungen am Filtermaterial während des Faltvorgangs können nun nicht mehr zu den ungewollten Überspritzungen führen.

Versuche haben ergeben, dass die auf diese Weise hergestellten Filterkassetten ausgezeichnete Gebrauchseigenschaften haben. Die Haltbarkeit des Filtermaterials im Kunststoffrahmen ist entlang der gesamten Längsseiten übereinstimmend gut, da das Filtermaterial entlang der gesamten Längsseiten eine im Wesentlichen übereinstimmende Dichte aufweist und dadurch gleichmäßig vom Kunststoffrahmen umschlossen wird.

Das kleinere Spaltmaß kann durch eine Abflachung der Talsohlen an einer oder beiden Formhälften des Spritzgießwerkzeugs erreicht werden. Durch eine solche Profilierung kann gegebenenfalls auch eine stärkere Verpressung im Bereich der Faltenkanten erreicht werden.

Das größere Spaltmaß kann durch eine Abflachung der Zahnkuppen an einer oder beiden Formhälften erzielt werden.

Die mit einem solchen Spritzgießwerkzeug hergestellte Filterkassette kennzeichnet sich dadurch aus, dass die Dicke des Filtermaterials im Bogenbereich der oberen und/oder unteren Faltenkanten an den Längsseiten des Kunststoffrahmens kleiner oder größer als die Dicke der Faltenflanken ist. Dies ist besonders günstig wenn das Filtermaterial mindestens eine Schicht aus einem adsorbenshaltigen Material hat.

### Kurzbeschreibung der Zeichnung

Anhand eines in der Zeichnung dargestellten Ausführungsbeispiels wird die Erfindung näher erläutert.

Es zeigt:
- Fig. 1: auszugsweise die Seitenansicht eines Spritzgießwerkzeugs mit eingefügtem Filtermaterial im Klemmbereich und
- Fig. 2: einen Schnitt gemäß der Linie A.-A der Fig. 1.

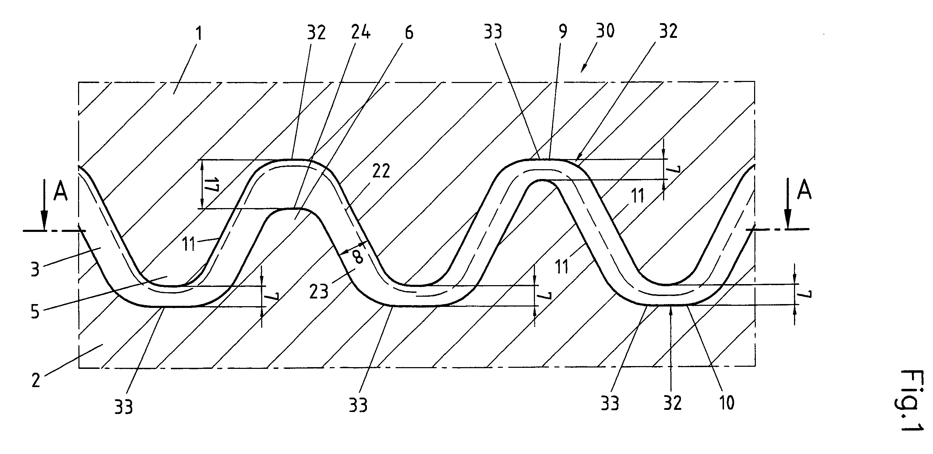

In der Fig. 1 ist systematisch der Erfindungsgedanke anhand eines Abschnitts aus einem Spritzgießwerkzeug 30 im Klemmbereich 31 gezeigt. Es wird darauf verzichtet, das gesamte Spritzgießwerkzeug darzustellen, da dieses an sich bekannt ist und eine unterschiedliche Ausbildung haben kann. Die Fig. 1 zeigt deshalb die obere Formhälfte 1 und die untere Formhälfte 2 eines Abschnitts eines Spritzgießwerkzeugs 30 im Schnitt vorbereitet für den Spritzgießvorgang, bei dem das Filtermaterial 3 an seinen Längsseiten 4 von den Zähnen 5 und 6 des Spritzgießwerkzeugs 30 erfaßt und zusammengedrückt ist. Das Spaltmaß 7 im Bogenbereich 39 der oberen und der unteren Faltkanten 9 und 10 auf der rechten Seite der Fig. ist kleiner als das Spaltmaß 8 der Faltenflanken 11. Die Größe der Bogenbereiche an der oberen oder unteren Faltenkante 9 oder 10 wird in Abhängigkeit von dem eingesetzten Filtermaterial 3 gewählt. Er ist so abgemessen, dass er mögliche Beschädigungen oder Veränderungen an den Faltenkanten 9, 10 überdeckt und dadurch zu einer etwa gleichen spezifischen Flächenpressung an den Faltenkanten 9, 10 führt, wie sie an den Faltenflanken 11 gegeben ist. Diese Art der Verringerung des Spaltmaßes 7 im Bogenbereich 32 gegenüber dem Spaltmaß 8 an den Faltenflanken 11 ist vorteilhaft, wenn ein Filtermaterial verwendet wird, welches im Schichtaufbau symmetrisch ist. Zum Beispiel eine Vliesstoffschicht der Mitte, die mit Partikelschichten auf beiden Seiten belegt ist. Die Talsohlen 33 sind auf beiden Formhälften 1 und 2 in den Bodenbereich 32 abgeflacht. Bei der Herstellung des Kunststoffrahmens für ein asymmetrisch ausgebildetes Filtermaterial 3, das beispielsweise auf einer Vliesstoffschicht 22 mit darauf aufgebrachter Partikelschicht 23 besteht, ist eine andere Ausbildung der Spaltmaße zweckmäßig. Diese ist auf der linken Seite der Fig. 1 dargestellt. Auf der Seite des Filtermaterials 3 mit der Partikelschicht 23 werden die Talsohlen 33, wie bereits voranstehend geschildert, abgeflacht, so dass ein geringeres Spaltmaß 7 vorhanden ist. Außerdem können zusätzlich ebenfalls auf der Seite der Partikelschicht 23 die Zahnkuppen 24 abgeflacht werden, so dass hier ein größeres Spaltmaß 17 erreicht wird als das Spaltmaß 8 der Faltenkanten 11.

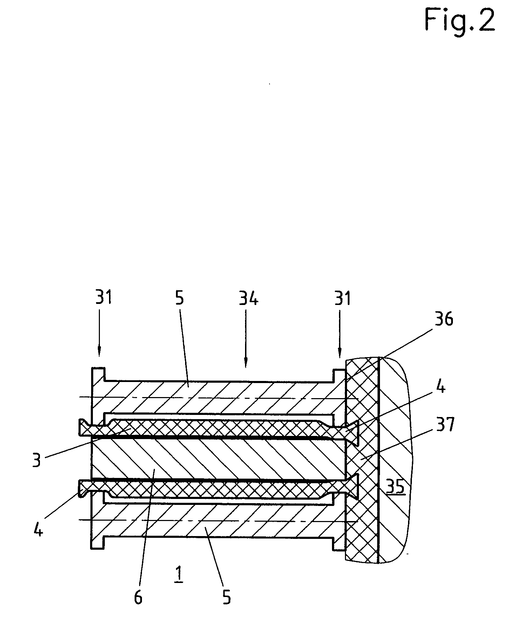

In der Fig. 2 ist ein Schnitt gemäß der Linie A-A der Fig. 1 gezeigt. Hier ist die Lage der einzelnen Werkzeugzähne 5 und 6 zueinander sichtbar. Dabei haben die Werkzeugzähne 6 eine glatte durchgehende Oberfläche, während die Werkzeugzähne 5 im Bereich des Aufnahmeraums 34 verringerte Flanken haben, damit das Filtermaterial 3 zwischen den Zähnen nicht zusammengedrückt wird. Das Filtermaterial 3 wird allein in den Klemmbereichen 31 an seinen Längsseiten 4 erfaßt. Zwischen der Außenwand 35 und den Stirnseiten 36 der Werkzeugzähne 5 und 6 ist der Formraum 37, in dem der Kunststoff zur Bildung des Kunststoffrahmens eingegossen wird.

Eine mit einem solchen Spritzgießwerkzeug hergestellte Filterkassette zeichnet sich dadurch aus, dass die Dicke 17 des Filtermaterials 3 im Bogenbereich 32 der oberen und/oder unteren Faltenkanten 19 an den Längsseiten 4 des Kunststoffrahmens 38 kleiner oder größer als die Dicke 8 an den Faltenkanten 11 ist.

## Patentansprüche

1. Spritzgießwerkzeug zur Herstellung eines Kunststoffrahmens an Filterkassetten durch randseitiges Umspritzen der Längsseiten eines zickzackförmig gefalteten Filtermaterials mit Kunststoff, wobei die Werkzeughälften des Spritzgießwerkzeugs zahnförmig ineinandergreifend ausgebildet sind und einen Aufnahmeraum für das Filtermaterial und einen Formraum für den Kunststoffrahmen bilden, welche durch einen von den Werkzeugzähnen gebildeten Klemmbereich voneinander getrennt sind, **dadurch gekennzeichnet, dass** im Klemmbereich (31) der Längsseiten (4) des Spritzgießwerkzeugs (30) das Spaltmaß (7, 17) zwischen den geschlossenen Formhälften (1, 2) des Spritzgießwerkzeugs (30) im Bogenbereich (32) der oberen und/oder unteren Faltenkanten (9, 10) des Filtermaterials (3) kleiner oder größer als das Spaltmaß (8) der Faltenflanken (11) ist.

2. Spritzgießwerkzeug nach Anspruch 1, **dadurch gekennzeichnet, dass** das kleinere Spaltmaß (7) durch eine Abflachung der Talsohlen (33) an einer der Formhälften (1,2) hergestellt ist.

3. Spritzgießwerkzeug nach Anspruch 1 oder 2, **dadurch gekennzeichnet, dass** das größere Spaltmaß (17) durch eine Abflachung der Zahnkuppen (24) an einer oder beiden Formhälften (1.2) hergestellt ist.

4. Filterkassette zum Filtern von Fluiden mit einem zickzackförmig gefalteten Filtermaterial und einem zumindest die Längsseiten des Filtermaterials einfassenden in einem Spritzgießwerkzeug hergestellten Kunststoffrahmen, **dadurch gekennzeichnet, dass** die Dicke (7, 17) des Filtermaterials (3) im Bogenbereich (32) der oberen und/oder unteren Faltenkanten (9, 10) an den Längsseiten (4) des Kunststoffrahmens (38 ) kleiner oder größer als die Dicke (8) der Faltenflanken (11) ist.

5. Filterkassette nach Anspruch 4, **dadurch gekennzeichnet, dass** das Filtermaterial (3) aus einer Vliesstoffschicht und mindestens einer Schicht aus adsorptiven Partikeln besteht.

6. Filterkassette nach Anspruch 4 oder 5, **dadurch gekennzeichnet, dass** das Filtermaterial (3) im Schichtaufbau asymmetrisch ausgebildet ist.

7. Filterkassette nach Anspruch 6, **dadurch gekennzeichnet, dass** das Filtermaterial (3) aus einer Vliesstoffschicht (22) und einer damit verbundenen Partikelschicht (23) besteht.

8. Filterkassette nach Anspruch 7, **dadurch gekennzeichnet, dass** auf der Seite der Partikelschicht (23) die Talsohlen (33) des Filtermaterials (3) abgeflacht sind, so dass die Dicke (7) des Filtermaterials (3) kleiner als die Dicke (8) der Faltenflanken (11) ist oder die Faltenkuppen (24) des Filtermaterials (3) abgeflacht sind, so dass die Dicke (17) des Filtermaterials (3) größer als die Dicke (8) der Faltenkanten (11) ist.
